# EUROPÄISCHE PATENTANMELDUNG

(11) **EP 3 153 390 A1**
(43) Veröffentlichungstag der Anmeldung: **12.04.2017**
(21) Anmeldenummer: 16189952.1
(22) Anmeldetag: 21.09.2016
(51) Int. Cl.: B62K 7/02

(54) **MEHRSPUR-FAHRRAD**

(30) Priorität: 05.10.2015 DE 202015105238 U
(71) Anmelder: OP-Maritim IP GmbH, 4704 Niederbipp (CH)
(72) Erfinder: Lange, Heiko, 47608 Geldern (DE); Ophardt, Hermann, 47661 Issum (DE)
(74) Vertreter: Stenger Watzke Ring

(57) **Zusammenfassung**

Mehrspur-Fahrrad, insbesondere Mehrspur-Schwerlastfahrrad, mit einem einer Lastaufnahme dienenden Vorderteil (3) und einem dem Vorderteil (3) in Fahrtrichtung (2) nachgeordneten und eine Antriebseinrichtung (6) bereitstellenden Hinterteil (4), wobei das Hinterteil (4) gegenüber dem Vorderteil (3) um eine in Normalstellung horizontal verlaufende Schwenkachse (35) verschwenkbar am Vorderteil (3) angeordnet ist, wobei das Vorderteil (3) einen Querträger (15) mit zwei daran jeweils um eine in Normalstellung vertikal verlaufende Lenkachse (17) verschwenkbar angeordnete Vorderräder (11) aufweist, und mit einer verschwenkbar am Hinterteil (4) angeordneten Lenkstange (10), die in Wirkverbindung mit den Vorderrädern (11) steht, wobei je Vorderrad (11) eine an die Lenkstange (10) angeschlossene Spurstange (18) vorgesehen ist.

## Beschreibung

Die Erfindung betrifft ein Mehrspur-Fahrrad, insbesondere ein Mehrspur-Schwerlastfahrrad, mit einem einer Lastaufnahme dienenden Vorderteil und einem dem Vorderteil in Fahrtrichtung nachgeordneten und eine Antriebseinrichtung bereitstellenden Hinterteil.

Schwerlastfahrräder dienen dem Transport von vergleichsweise schweren Lasten, worunter im Sinne der Erfindung Lasten mit einem Gewicht von mehreren hundert Kilogramm, beispielsweise 300 Kilogramm und mehr zu verstehen sind. Derartige Schwerlastfahrräder im Allgemeinen sowie Mehrspur-Schwerlastfahrräder im Speziellen sind aus dem Stand der Technik an sich bekannt, weshalb es eines gesonderten druckschriftlichen Nachweises an dieser Stelle nicht bedarf.

Gemäß einer typischen Bauform verfügen aus dem Stand der Technik vorbekannte Mehrspur-Schwerlastfahrräder über ein Vorderteil einerseits und ein Hinterteil andererseits, wobei das Hinterteil dem Vorderteil in Fahrrichtung nachgeordnet ist. Das Vorderteil dient der Lastaufnahme und verfügt zu diesem Zweck über entsprechende Lastaufnahmeeinrichtungen, beispielsweise in der Ausgestaltung eines Lastaufnahmekastens oder -box.

Das dem Vorderteil in Fahrtrichtung nachgeschaltete Hinterteil stellt die Antriebseinrichtung bereit, die im Betriebsfall für einen Antrieb eines vom Hinterteil bereitgestellten Hinterrades sorgt. Ein solcher Antrieb kann in an sich bekannter Weise über Muskelkraft und/oder elektromotorisch erfolgen. Zu diesem Zweck ist die Antriebseinrichtung in an sich bekannter Weise ausgebildet und verfügt beispielsweise über einen auf das Hinterrad in Betriebsfall einwirkende Pedal-Anordnung.

Das Vorderteil kann je nach Ausgestaltung des Schwerlastfahrrades über ein Vorderrad oder über zwei quer zur Fahrtrichtung voneinander beabstandete Vorderräder verfügen. Im Falle zweier Vorderräder erfolgt die Lastaufnahme typischerweise zwischen den beiden voneinander beabstandeten Vorderrädern.

Zum Zwecke der Lenkung insbesondere im Fahrbetrieb ist das Vorderteil unter Zwischenordnung eines Vertikallagers am Hinterteil angeordnet. "Vertikallager" meint dabei ein solches Lager, dass eine in Normalstellung im Wesentlichen vertikal verlaufende Schwenkachse bereitstellt, das heißt eine solche Schwenkachse, die im Wesentlichen senkrecht zur Fahrtrichtung ausgerichtet ist. Aus Gründen einer verbesserten Fahrdynamik kann die Schwenkachse auch leicht geneigt zur Vertikalen ausgerichtet sein, was "im Wesentlichen vertikal verlaufend" mit einschließt.

Zur Einleitung einer Lenkbewegung kommt typischerweise ein verwenderseitig zu betätigender Lenker zum Einsatz, der im Verdrehfall eine Verdrehbewegung des Vorderteils relativ gegenüber dem Hinterteil um die vom Vertikallager bereitgestellte Schwenkachse bewerkstelligt.

Ein gattungsgemäßes Mehrspur-Fahrrad ist aus der DE 43 07 269 A1 bekannt. Das vorbekannte Fahrrad besteht aus einem ersten und einem zweiten Rad hinten oder vorn, die nebeneinander angeordnet sind, einem Rahmen zwischen diesen Rädern, der diese hält, einem Gestell mit einem Sattel und einem dritten Rad vorn oder hinten. Das Gestell ist gemäß einem bevorzugten Ausführungsbeispiel gegenüber dem Rahmen um eine horizontale Achse verschwenkbar. Um dies zu ermöglichen, ist ein Universalgelenk vorgesehen, das über ein erstes Wellenstück und ein zweites Wellenstück verfügt, wobei das zweite Wellenstück in dem Rahmen gelagert ist. An diesem am Rahmen angebrachten Wellenstück sitzt ein Hebel, der endseitig Stangen trägt, die mit einem am jeweiligen Rad angebrachten Schwenker zusammenwirken. Im Ergebnis ist so eine von der Verschwenkbarkeit des Gestells entkoppelte Gelenkstangenanordnung ausgebildet.

Ein Mehrspur-Fahrrad ist ferner aus der US 4,903,857 bekannt. Dieses betrifft aber kein gattungsgemäßes Mehrspur-Fahrrad, da es an einer Verschwenkbarkeit zwischen einem Vorderteil und einem Hinterteil des Mehrspur-Fahrrades fehlt. Entsprechendes gilt für ein aus der US 2003/0102176 A1 vorbekanntes Mehrspur-Fahrrad.

Obgleich sich die vorbeschriebene Konstruktion im alltäglichen Praxiseinsatz bewährt hat, besteht Verbesserungsbedarf, insbesondere hinsichtlich der Fahrdynamik in Kurvenfahrten, und dies unter Berücksichtigung der im Betriebsfall unter Umständen aufgenommenen vergleichsweise schweren Lasten.

Es ist deshalb die **Aufgabe** der Erfindung, ein neuartiges Schwerlastfahrrad vorzuschlagen, das unter gleichzeitiger Berücksichtigung der im Betriebsfall aufgenommenen Lasten konstruktionsbedingt ein verbessertes Fahrverhalten insbesondere in Kurvenfahrten ermöglicht.

Zur **Lösung** dieser Aufgabe wird mit der Erfindung vorgeschlagen ein Mehrspur-Schwerlastfahrrad mit einem einer Lastaufnahme dienenden Vorderteil und einem dem Vorderteil in Fahrtrichtung nachgeordneten und die Antriebseinrichtung bereitstellenden Hinterteil, wobei das Hinterteil gegenüber dem Vorderteil um eine in Normalstellung horizontal verlaufende Schwenkachse verschwenkbar am Vorderteil angeordnet ist, wobei das Vorderteil einen Querträger mit zwei daran jeweils um eine in Normalstellung vertikal verlaufende Lenkachse verschwenkbar angeordnete Vorderräder aufweist, und mit einer verschwenkbar am Hinterteil angeordneten Lenkstange, die in Wirkverbindung mit den Vorderrädern steht, wobei je Vorderrad eine an die Lenkstange angeschlossene Spurstange vorgesehen ist.

In Abkehr zur Ausgestaltung nach dem Stand der Technik verfügt das erfindungsgemäße Fahrrad über ein Horizontallager, das das Hinterteil verschwenkbar mit dem Vorderteil verbindet. "Horizontallager" im Sinne der Erfindung meint dabei ein solches Lager, das eine in Normalstellung des Fahrrads horizontal verlaufende Schwenkachse bereitstellt, das heißt eine Schwenkachse, die parallel zur Fahrbahn ausgerichtet ist. Das Fahrradhinterteil kann mithin um eine parallel zur Fahrbahn verlaufende Schwenkachse relativ zum Vorderteil verdreht, das heißt geneigt werden.

Das Vorderteil verfügt über einen Querträger. Dieser weist endseitig jeweils ein Vorderrad auf, die jeweils verschwenkbar am Querträger angeordnet sind. Dabei ist ein jedes Vorderrad um eine in Normalstellung vertikal verlaufende Lenkachse verschwenkbar am Querträger angeordnet. "In Normalstellung vertikal verlaufende Lenkachse" meint dabei eine Lenkachse, die in Normalstellung des Fahrrades senkrecht zur Fahrbahn, mithin senkrecht zur Schwenkachse des das Hinterteil mit dem Vorderteil verbindenden Horizontallagers ausgerichtet ist. Ein jedes Vorderrad kann mithin um eine in diesem Sinne vertikal verlaufende Lenkachse relativ gegenüber dem Querträger verschwenkt werden.

Zur verwenderseitigen Einleitung einer Lenkkraft ist eine Lenkstange vorgesehen, die verwenderseitig bevorzugterweise einen Lenker trägt. Dieser ist verwenderseitig zur Einleitung einer Lenkkraft zu ergreifen, wobei die Lenkstange verdrehbar am Hinterteil angeordnet ist. Demnach sind die verdrehbaren Vorderräder am Vorderteil und die zur Einleitung einer Lenkbewegung vorgesehene Lenkstange am Hinterteil angeordnet.

Die Lenkstange steht in Wirkverbindung mit den Vorderrädern, zu welchem Zweck Spurstangen vorgesehen sind. Dabei ist je Vorderrad eine Spurstange vorgesehen, die einendseitig an die Lenkstange und anderendseitig an das zugehörige Vorderrad angeschlossen ist.

Die erfindungsgemäße Konstruktion erbringt eine im Unterschied zur vorbekannten Ausgestaltung verbesserte Fahrdynamik, insbesondere in Kurvenfahrten. Dabei wirken die einzelnen vorerläuterten Baukomponenten synergetisch zusammen.

Im Falle einer Kurvenfahrt neigt sich der das erfindungsgemäße Fahrrad steuernde Verwender in die Kurve. Dies führt schwerkraftbedingt zu einer Verdrehbewegung des Hinterteils relativ gegenüber dem Vorderteil, und zwar um die durch das Horizontallager bereitgestellte Schwenkachse. Infolge dieser Verdrehbewegung des Hinterteils relativ gegenüber dem Vorderteil verlängert sich gegenüber der Geradeausfahrt der Abstand zwischen kurveninnerem Vorderrad einerseits und Lenkstange andererseits, wobei sich gleichzeitig im Unterschied zur Stellung bei Geradeausfahrt der Abstand zwischen dem kurvenäußeren Vorderrad einerseits und der Lenkstange andererseits verkürzt. Infolge der Zwangskupplung über die Spurstangen ergibt sich infolgedessen eine Verschwenkbewegung der Vorderräder allein aufgrund der verwenderseitigen Gewichtsverlagerung im Falle einer Kurvenfahrt. Dabei verschwenkt die Lenkstange dank der Anordnung am Hinterteil mit, so dass der Lenkkomfort infolge einer Verdrehbewegung des Hinterteils nicht beeinträchtigt wird.

Sollte die Vorderradverschwenkung allein aufgrund der verwenderseitigen Gewichtsverlagerung nicht ausreichen, kann verwenderseitig eine ergänzende Verschwenkbewegung der Vorderräder durch Verdrehbewegung der Lenkstange erreicht werden. Die auf die Spurstange des kurveninneren Rads einwirkende Zugkraft wird hierdurch ebenso erhöht wie die auf das kurvenäußere Rad einwirkende Druckkraft.

Durch die in Normalstellung vertikal verlaufenden Lenkachsen der Vorderräder wird indes sichergestellt, dass es auch bei einer Kurvenfahrt nicht zu einem Anheben oder Absenken des die Vorderräder tragenden Querträgers kommt. Der Querträger und die von diesem im Betriebsfall aufgenommene Last bleiben mithin sowohl bei einer Geradeausfahrt als auch bei einer Kurvenfahrt stets auf gleichem Höhenniveau, heben oder senken sich bei einer Kurvenfahrt also nicht.

Im Ergebnis wird durch die erfindungsgemäße Konstruktion in vorteilhafter Weise erreicht, dass bei gleichzeitiger Höhenniveauhaltung des der Lastaufnahme dienenden Vorderteils auch bei Kurvenfahrten ein verbessertes dynamisches Fahrverhalten dadurch erreicht ist, als dass es dem Fahrradverwender gestattet ist, sich bei einer Kurvenfahrt in die Kurve legen zu können, wobei dieses in die Kurve legen zugleich schwerkraftbedingt einen Lenkeinschlag bewirkt und somit die manuell über die Lenkstange einzubringende Lenkbewegung unterstützt. Damit gestattet die erfindungsgemäße Konstruktion trotz mehrspuriger Ausgestaltung ein Fahrverhalten, wie dies bislang nur bei Zwei-Rad-Fahrrädern erreichbar ist. Da zudem eine Auf- und Abbewegung des Vorderteils auch in Kurvenfahrten unterbunden ist, erweist sich die erfindungsgemäße Konstruktion im Betriebsfall als energiesparend, was insbesondere mit Blick auf die Verwendung als Schwerlastfahrrad von Vorteil ist. Insbesondere bei der Verwendung eines elektromotorischen Antriebs kommt dieser Vorteil zum Tragen, da nicht unnötig Energie darauf verwandt werden muss, die vom Vorderteil des Fahrrades im Betriebsfall aufgenommene Last in Kurvenfahrten unnötiger Weise auf und ab zu senken.

Gemäß einem weiteren Merkmal der Erfindung ist je Vorderrad eine Radaufhängung vorgesehen, die eine Radachse bereitstellt, die in Fahrtrichtung der jeweiligen Lenkachse nachgeordnet ist.

Im bestimmungsgemäßen Verwendungsfall nimmt die Radachse einer jeden Radaufhängung das zugehörige Vorderrad verdrehbar auf. Im Betriebsfall verdreht also das Vorderrad um die Radachse, auf der es angeordnet ist. Erfindungsgemäß ist die Radachse der Lenkachse, um die Zwecks Lenkung eine Verdrehung des Vorderrades gestattet ist, in Fahrtrichtung nachgeordnet. Radachse und Lenkachse sind mithin voneinander beabstandet in Fahrtrichtung ausgerichtet. Diese Ausgestaltung führt zu dem positiven Effekt eines Nachlaufs, das heißt es ist sichergestellt, dass sich die Vorderräder bei einer ausbleibenden Lenkbewegung automatisch in Richtung eines Geradeauslaufes ausrichten.

Je Radaufhängung ist gemäß einem weiteren Merkmal der Erfindung ein Lenkhebel vorgesehen, an dem die jeweils zugehörige Spurstange einendseitig angeordnet ist, wobei der Lenkhebel unter Ausbildung eines Lenkhebelwinkels geneigt zur Laufrichtung des jeweils zugehörigen Vorderrades ausgerichtet ist. Die geneigte Ausrichtung des Lenkhebels relativ zur Laufrichtung des zugehörigen Vorderrades bewirkt den positiven Effekt, einen Spurdifferenzwinkel auszubilden. Ein gleichförmiger Kurvenlauf ist damit gewährleistet.

Gemäß einer bevorzugten Ausführungsform verfügt eine jede Radaufhängung über einen Hülsenkörper, der verdrehbar zwischen zwei Beinen einer Gabelanordnung gehalten ist. Dieser Hülsenkörper trägt einerseits die Radachse sowie andererseits den Lenkhebel. Dabei ist die Radachse unter Zwischenordnung eines Flanschfortsatzes am Hülsenkörper angeordnet. Sowohl der Flanschfortsatz als auch der Lenkhebel sind mit dem Hülsenkörper bevorzugterweise verschweißt. Dabei ist der Flanschfortsatz in Laufrichtung des jeweiligen Vorderrades ausgebildet und der Lenkhebel ist unter Ausbildung eines Lenkhebelwinkels hierzu versetzt ausgerichtet, so dass sich im Kurvenfahrfall ein Spurdifferenzwinkel einstellt.

Es ist gemäß einem weiteren Merkmal der Erfindung vorgesehen, dass eine Spurstange lenkstangenseitig an einen an der Lenkstange angeordneten Spurstangenhebel angelenkt ist. Demgemäß ist die Lenkstange je Spurstange mit einem Spurstangenhebel ausgerüstet, der sich mit Bezug auf die Drehachse der Lenkstange radial erstreckt. Bevorzugterweise sind ein Spurstangenhebel und der zugehörige Lenkhebel parallel zueinander verlaufend ausgerichtet, schließen mithin den gleichen Lenkhebelwinkel zur Laufrichtung des jeweils zugehörigen Vorderrades ein. Es wird so ein verbessertes Einlenkverhalten erreicht.

Es ist gemäß einem weiteren Merkmal der Erfindung vorgesehen, dass die Lenkstange zwei Lenkstangenabschnitte aufweist, die an ein gemeinsames Kardangelenk angeschlossen sind.

Der spurstangenhebelseitige Lenkstangenabschnitt ist bevorzugterweise in Entsprechung der durch die Radaufhängungen bereitgestellten Lenkachsen ausgerichtet. Etwaigen Verschränkungen während eines Lenkvorgangs wird so entgegengewirkt. Um aber gleichwohl einem Verwender des erfindungsgemäßen Fahrrades eine komfortable Sitz- und Lenkposition zu ermöglichen, ist der obere, das heißt lenkerseitige Abschnitt der Lenkstange zur Vertikalen geneigt ausgerichtet. Zwecks Lenkkraftübertragung sind die beiden Lenkstangenabschnitte über ein Kardangelenk miteinander kraftgekoppelt.

Gemäß einem weiteren Merkmal der Erfindung ist ein Dämpfungselement vorgesehen, das eine Verdrehbewegung von Vorder- und Hinterteil nicht-linear dämpft. Zum einen wird hierdurch ein Umkippen des Fahrrades im Kurvenfahrfall verhindert, zum anderen erfolgt das Neigen des Hinterteils relativ gegenüber dem Vorderteil in einer solchen Weise, wie dies Verwender von Zwei-Rad-Fahrrädern gewöhnt sind. Das erfindungsgemäße Schwerlastfahrrad bietet mithin insbesondere auch in Kurvenfahrten ein solches Fahrverhalten, das sich trotz der Möglichkeit, vergleichsweise schwere Last transportieren zu können, nicht von einem Fahrverhalten eines Zwei-Rad-Fahrrades unterscheidet. Dabei ist das Dämpfungselement bevorzugterweise derart ausgelegt, das dämpfungselementseitig mit zunehmender Neigung ein zunehmender Widerstand zur Verfügung steht. Das heißt die Neigung ausgehend aus der Normalstellung des Fahrrades ist zunächst vergleichsweise ungedämpft, und die Dämpfung nimmt mit zunehmender Neigung zu.

Gemäß einem weiteren Merkmal der Erfindung ist vorgesehen, dass das Dämpfungselement einen verdrehbar am Vorderteil angeordneten Wippenhebel aufweist. Dieser Wippenhebel ist verdrehbar ausgebildet und er ist jeweils endseitig verdrehbar mit daran angeordneten Gelenkkopfstangen ausgerüstet, die sich ihrerseits gelenkig gegenüber dem Hinterteil abstützen. Auf diese Weise wird die schon vorbeschriebenen neigungsabhängige Dämpfung erreicht, da mit zunehmender Verdrehung des Hinterteils relativ gegenüber dem Vorderteil der vom Dämpfungselement bereitgestellte Wippenhebel verdreht, was mit zunehmender Verdrehung zu einer verstärkten Dämpfungswirkung führt.

Alternativ kann das Dämpfungselement auch als Dreh-Dämpfungselement ausgebildet sein. Demgemäß verfügt das Dämpfungselement über eine verdrehbar gelagerte Welle, die mit elastischen Dämpfern zusammenwirkende Kontaktflächen bereitstellt. Diese Kontaktflächen können sich beispielsweise dadurch ergeben, dass die Welle bereichsweise von der Kreisform abweichend ausgebildet ist und beispielsweise eine im Querschnitt mehreckige Kontur aufweist. Die so ausgebildeten Kontaktflächen wirken jeweils bei einer Verdrehbewegung der Welle mit einem zugehörigen elastischen Dämpfer zusammen, wodurch es in der schon vorbeschriebenen Weise zu einer gedämpften Verdrehbewegung von Vorder- und Hinterteil kommt.

Weitere Vorteile und Merkmal der Erfindung ergeben sich aus der nachfolgenden Beschreibung anhand der Figuren. Dabei zeigen
- Fig.1: in einer schematischen Seitenansicht ein erfindungsgemäßes Schwerlastfahrrad;
- Fig. 2: in einer schematischen Draufsicht von oben das erfindungsgemäße Schwerlastfahrrad nach Fig. 1;
- Fig. 3: in schematisch perspektivischer Ansicht ausschnittsweise das Vorderteil des erfindungsgemäßen Fahrrades nach den Figuren 1 und 2;
- Fig. 4: in einer weiteren schematischen Perspektivdarstellung ausschnittsweise das Vorderteil des erfindungsgemäßen Fahrrades nach den Figuren 1 und 2 und
- Fig. 5: in schematischer Perspektivdarstellung eine alternative Ausführungsform eines Dämpfungselements.

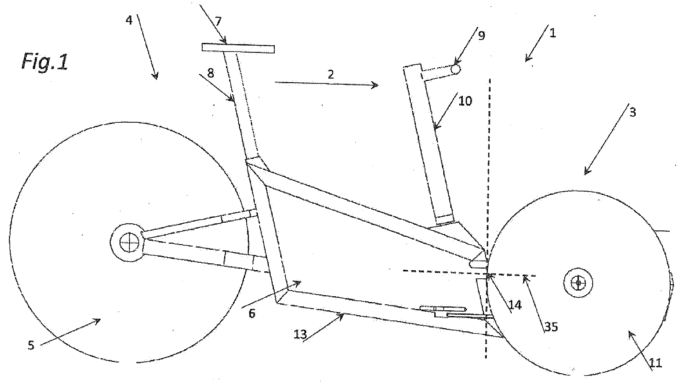

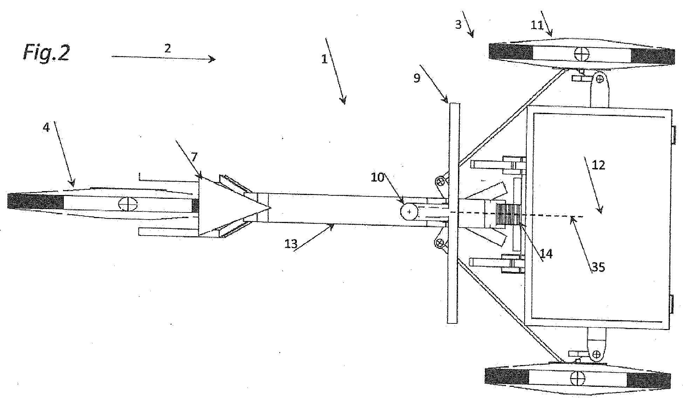

Die Figuren 1 und 2 lassen das erfindungsgemäße Schwerlastfahrrad 1 jeweils in rein schematischer Ansicht erkennen, wobei Fig. 1 eine Seitenansicht und Fig. 2 eine Draufsicht von oben zeigt.

Das erfindungsgemäße Fahrrad 1 verfügt über ein Vorderteil 3 und ein Hinterteil 4, wobei das Hinterteil 4 unter Zwischenordnung eines Horizontallagers 14 am Vorderteil 3 angeordnet ist. Das Horizontallager 14 stellt eine Schwenkachse 35 bereit, die in Normalstellung des Fahrrades 1 im Wesentlichen horizontal verläuft, mithin parallel zur Fahrbahn.

Das Hinterteil 4 verfügt über eine im Detail nicht näher dargestellte Rahmenkonstruktion 13, die unter anderem der Aufnahme einer ebenfalls nicht näher dargestellten Antriebseinrichtung 6 dient. Die Antriebseinrichtung 6 dient dem Antrieb eines vom Hinterteil 4 bereitgestellten Hinterrades 5.

Die Rahmenkonstruktion 13 stellt ferner in an sich bekannter Weise eine Sattelstange 8 bereit, die zur verwenderseitigen Inanspruchnahme einen Sattel 7 trägt.

Das Hinterteil 4 stellt desweiteren eine verschwenkbar am Hinterteil 4 angeordnete Lenkstange 10 bereit, an welcher ein Lenker 9 angeordnet ist.

Wie insbesondere die Draufsicht von oben nach Fig. 2 erkennen lässt, verfügt das Vorderteil 3 über zwei Vorderräder 11. Diese sind quer zur Fahrtrichtung 2 beabstandet zueinander angeordnet und stellen zwischen sich eine Aufnahmeeinrichtung 12 bereit, die im bestimmungsgemäßen Verwendungsfall des Fahrrades der Aufnahme einer Last, insbesondere einer Schwerlast von mehreren hundert Kilogramm dient.

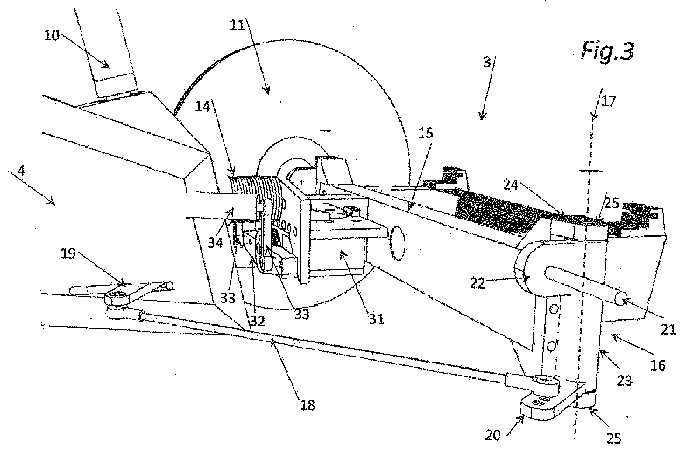

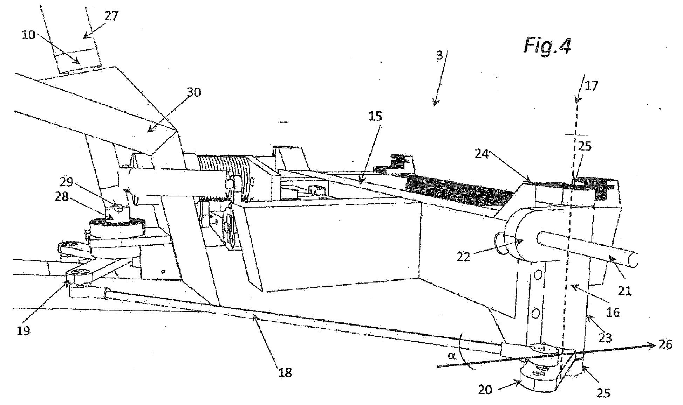

Wie insbesondere die schematischen Perspektivdarstellungen nach den Figuren 3 und 4 erkennen lassen, stellt das Vorderteil 3 einen Querträger 15 bereit. Dieser nimmt die in den Figuren 3 und 4 nicht näher dargestellte Aufnahmeeinrichtung 12 auf. Endseitig des Querträgers 15 sind jeweils Radaufhängungen 16 montiert, die jeweils der verdrehbaren Anordnung eines Vorderrades 11 dienen.

Eine jede Radaufhängung 16 verfügt über einen zwischen zwei Beinen 25 einer Gabelanordnung 24 verdrehbar angeordneten Hülsenkörper 23. Dabei ist der Hülsenkörper 23 um einen Lenkachse 17 verschwenkbar, die Normalstellung des Fahrrades 1 im Wesentlichen vertikal, das heißt senkrecht zur Fahrbahn ausgerichtet ist. Der Hülsenkörper 23 einer Radaufhängung 16 trägt ferner einen Flanschfortsatz 22, an dem seinerseits eine Radachse 21 angeordnet ist. Die Radachse 21 dient der verdrehbaren Aufnahme eines Vorderrades 11, das heißt im endmontierten Zustand erfolgt eine Verdrehbewegung des Vorderrades 11 um die Radachse 21.

Wie insbesondere die Figuren 3 und 4 erkennen lassen, ist aufgrund der Zwischenordnung des Flanschfortsatzes 22 zwischen einem Hülsenkörper 23 und der zugehörigen Radachse 21 sichergestellt, dass die Radachse 21 der Lenkachse 7 in Fahrtrichtung 2 nachgeordnet ist. Ein Nachlauf ist somit gewährleistet.

Die senkrechte Ausgestaltung der Lenkachsen 17 erbringt indes den Vorteil, dass es bei einer Kurvenfahrt nicht zu einer Auf- und Abbewegung des Vorderteils 3 und damit der davon aufgenommenen Last kommt. Auch bei einer Kurvenfahrt ist das Vorderteil 3 vielmehr stets auf gleichem Höhenniveau oberhalb der Fahrbahn ausgerichtet. Die insoweit fehlende Spreizung wird bei der erfindungsgemäßen Konstruktion indes dadurch kompensiert, dass die Radaufhängung möglichst nah an die Felgenmitte der Vorderräder 11 geführt ist.

Wie die Figuren 3 und 4 desweiteren erkennen lassen, ist ein jeder Hülsenkörper 23 mit einem Lenkhebel 20 ausgerüstet. Dabei erstreckt sich der Lenkhebel 20 nicht in Laufrichtung 26 des zugehörigen Vorderrades 11, sondern ist vielmehr unter Ausbildung eines Lenkhebelwinkels α geneigt zur Laufrichtung 26 ausgerüstet. Dabei ist der Lenkhebelwinkel α in Abhängigkeit der Fahrzeuggeometrie auszulegen. Bei dieser Auslegung sind insbesondere die Spurbreite, der Radabstand in Längsrichtung des Fahrrades, die geometrische Ausgestaltung der Spurstangen und/oder dergleichen zu berücksichtigen. Beispielsweise kann der Lenkhebelwinkel α zwischen 20° und 60°, vorzugsweise zwischen 40° und 50° betragen.

Die winklige Anlenkung des Lenkhebels 20 gewährleistet, einen Spurdifferenzwinkel auszubilden, was eine gleichmäßige Kurvenfahrt gestattet.

Wie sich insbesondere aus der Darstellung nach Fig. 4 ergibt, stellt die Lenkstange 10 einen ersten Abschnitt 27 und einen zweiten Abschnitt 28 zur Verfügung. Diese beiden Abschnitte 27 und 28 sind über ein gemeinsames Kardangelenk 29 miteinander gekoppelt.

Der Abschnitt 28 der Lenkstange 10 ist hinsichtlich seiner Drehachse so ausgerichtet, dass sie senkrecht zur Fahrbahn ausgerichtet ist, das heißt parallel zu den Lenkachsen 17 der Radaufhängungen 16 verläuft.

Endseitig des Abschnitts 28 der Lenkstange 10 sind je Radaufhängung 16 jeweils ein Spurstangenhebel 19 angeordnet. Zur Verbindung eines Spurstangenhebels 9 mit dem zugehörigen Lenkhebel 20 dient eine Spurstange 18. Dies ergibt sich insbesondere aus einer Zusammenschau der Figuren 3 und 4.

Die Lenkstange 10 ist gelenkig am Hinterteil 4 angeordnet, zu welchem Zweck ein Lagerbock 30 vorgesehen ist, wie dies insbesondere Fig. 4 erkennen lässt.

Wie sich insbesondere ferner aus Fig. 3 ergibt, verfügt das Fahrrad 1 über ein Dämpfungselement 31, das dazu dient, eine Verdrehbewegung von Vorder- und Hinterteil 3, 4 nicht-linear zu dämpfen. Dabei ist die Dämpfungswirkung umso größer, je größer der Neigungswinkel zwischen Hinterteil 4 und Vorderteil 3 ausfällt.

Das Dämpfungselement 31 ist mit einem verdrehbaren Wippenhebel 32 ausgerüstet. Dieser trägt endseitig jeweils Gelenkkopfstangen 33, die sich am Hinterteil 4 abstützen, zu welchem Zweck das Hinterteil 4 entsprechende Anschlussteile 34 aufweist.

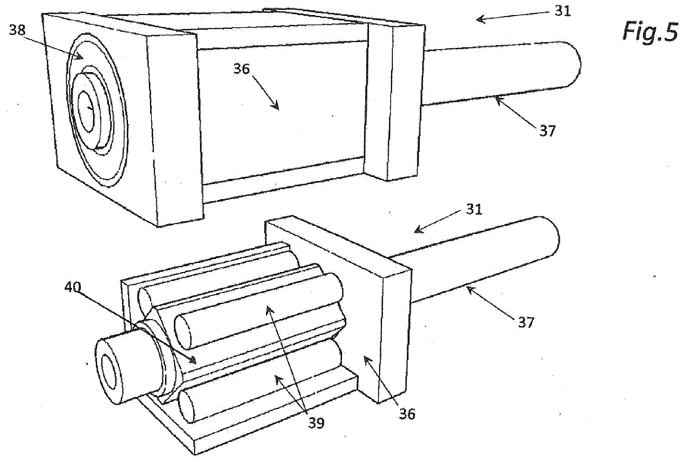

Fig. 5 lässt in schematischer Perspektivdarstellung ein alternativ ausgebildetes Dämpfungselement 31 erkennen, wobei eine endmontierte Stellung einerseits sowie eine teilmontierte Stellung andererseits dargestellt sind.

Das Dämpfungselement 31 nach Fig. 5 verfügt über ein Gehäuse 36, durch das hindurch eine verdrehbar gelagerte Welle 37 geführt ist. Zu diesem Zweck weist das Gehäuse 36 jeweils stirnseitig entsprechende Lager 38 auf. Endseitig der Welle 37 ist das in Fig. 5 der besseren Übersicht wegen nicht dargestellte Vorderteil 3 oder das Hinterteil 4 des Fahrrades 1 angeschlossen.

Innerhalb des Gehäuses 36 sind elastische Dämpfer 39 angeordnet, wobei im gezeigten Ausführungsbeispiel vier solcher Dämpfer 39 vorgesehen sind.

Die Dämpfer 39 stehen in Wirkverbindung mit der Welle 37, wobei die Welle 37 mit den Dämpfern 39 jeweils zusammenwirkende Kontaktflächen 40 bereitstellt. Im gezeigten Ausführungsbeispiel sind die Kontaktflächen 40 dadurch ausgebildet, dass die Welle 37 im Überdeckungsbereich mit den Dämpfern 39 von der Kreisform abweichend ausgebildet ist und eine mehreckige Kontur bereitstellt. Infolge dieser mehreckigen Wellenkontur entstehen die Kontaktflächen 40, wobei im gezeigten Ausführungsbeispiel in Entsprechung der insgesamt vier Dämpfer 39 vier damit zusammenwirkende Kontaktflächen 40 vorgesehen sind.

Bei einer Verdrehbewegung der Welle 37 um ihre Längsachse kommt es durch das Anliegen der Kontaktflächen 40 am jeweiligen Dämpfer 39 zu einer elastischen Verformung des Dämpfers 39, wodurch die mit dem Dämpfungselement 31 gegebene Dämpfung erreicht ist.

Die Funktionsweise der vorbeschriebenen Konstruktion ist wie folgt.

Die relative Verdrehbarkeit von Hinterteil 4 und Vorderteil 3 um die durch das Horizontallager 14 bereitgestellte Schwenkachse 35 gestattet es einem Verwender sich bei einer Kurvenfahrt in die Kurve zu legen. Dabei verschwenkt das Hinterteil 4 unter Einwirkung der Schwerkraft entsprechend relativ zum Vorderteil 3 um die Schwenkachse 35.

Wie sich insbesondere aus der Draufsicht nach Fig. 2 ergibt, verlängert sich infolge eines solchen Verschwenkens der Abstand zwischen dem Lenkhebel 20 des kurveninnenseitigen Vorderrads 11 und dem zugehörigen Spurstangenhebel 19. Aufgrund der Zwangsführung durch die Spurstange 18 führt dies zu einem Einlenken der Vorderräder 11 allein durch Gewichtsverlagerung.

Gleichzeitig ist eine manuelle Lenkung über die Lenkstange 10 möglich. Infolge einer Verdrehbewegung der Lenkstange 10 werden entsprechende Zug- beziehungsweise Druckkräfte in die Spurstangen 18 eingeleitet, was gleichfalls zu einer Verdrehbewegung der Vorderräder 11 um ihrer jeweiligen Lenkachsen 17 führt.

Dabei ist ob des Umstandes, dass die Lenkachsen 11 jeweils senkrecht zur Fahrbahn verlaufen sichergestellt, dass es auch bei Kurvenfahrten nicht zu einem unerwünschten An- und Absenken des Vorderteils 3 kommt. Dieses bleibt vielmehr auch bei einer Kurvenfahrt auf gleichem Höhenniveau in Relation zur Fahrbahn.

### Bezugszeichenliste

- 1: Fahrrad
- 2: Fahrtrichtung
- 3: Vorderteil
- 4: Hinterteil
- 5: Hinterrad
- 6: Antriebseinrichtung
- 7: Sattel
- 8: Sattelstange
- 9: Lenker
- 10: Lenkstange
- 11: Vorderrad
- 12: Aufnahmeeinrichtung
- 13: Rahmenkonstruktion
- 14: Horizontallager
- 15: Querträger
- 16: Radaufhängung
- 17: Lenkachse
- 18: Spurstange
- 19: Spurstangenhebel
- 20: Lenkhebel
- 21: Radachse
- 22: Flanschfortsatz
- 23: Hülsenkörper
- 24: Gabelanordnung
- 25: Bein
- 26: Laufrichtung
- 27: Abschnitt
- 28: Abschnitt
- 29: Kardangelenk
- 30: Lagerbock
- 31: Dämpfungselement
- 32: Wippenhebel
- 33: Gelenkkopfstange
- 34: Anschlussteil
- 35: Schwenkachse
- 36: Gehäuse
- 37: Welle
- 38: Lager
- 39: Dämpfer
- 40: Kontaktfläche
- α: Lenkhebelwinkel

## Patentansprüche

1. Mehrspur-Fahrrad, insbesondere Mehrspur-Schwerlastfahrrad, mit einem einer Lastaufnahme dienenden Vorderteil (3) und einem dem Vorderteil (3) in Fahrtrichtung (2) nachgeordneten und eine Antriebseinrichtung (6) bereitstellenden Hinterteil (4), wobei das Hinterteil (4) gegenüber dem Vorderteil (3) um eine in Normalstellung horizontal verlaufende Schwenkachse (35) verschwenkbar am Vorderteil (3) angeordnet ist, wobei das Vorderteil (3) einen Querträger (15) mit zwei daran jeweils um eine in Normalstellung vertikal verlaufende Lenkachse (17) verschwenkbar angeordnete Vorderräder (11) aufweist, und mit einer verschwenkbar am Hinterteil (4) angeordneten Lenkstange (10), die in Wirkverbindung mit den Vorderrädern (11) steht, wobei je Vorderrad (11) eine an die Lenkstange (10) angeschlossene Spurstange (18) vorgesehen ist.

2. Mehrspur-Fahrrad nach Anspruch 1, **dadurch gekennzeichnet, dass** je Vorderrad (11) eine Radaufhängung (16) vorgesehen ist, die eine Radachse (21) bereitstellt, die in Fahrtrichtung (2) der jeweiligen Lenkachse (17) nachgeordnet ist.

3. Mehrspur-Fahrrad nach Anspruch 2, **dadurch gekennzeichnet, dass** je Radaufhängung (16) ein Lenkhebel (20) vorgesehen ist, an dem die jeweils zugehörige Spurstange (18) einendseitig angeordnet ist, wobei der Lenkhebel (20) unter Ausbildung eines Lenkhebelwinkels (α) geneigt zur Laufrichtung (26) des jeweils zugehörigen Vorderrads (11) ausgerichtet ist.

4. Mehrspur-Fahrrad nach Anspruch 3, **dadurch gekennzeichnet, dass** der Lenkhebelwinkel (α) zwischen 30° und 60°, vorzugsweise zwischen 40° und 50° beträgt.

5. Mehrspur-Fahrrad nach einem der vorhergehenden Ansprüche, **dadurch gekennzeichnet, dass** eine Spurstange (18) lenkstangenseitig an einen an der Lenkstange (10) angeschlossenen Spurstangenhebel (19) angelenkt ist.

6. Mehrspur-Fahrrad nach Anspruch 5, **dadurch gekennzeichnet, dass** der einendseitig einer Spurstange (18) vorgesehene Lenkhebel (20) und der anderendseitig der Spurstange (18) vorgesehen Spurstangenhebel (19) parallel zueinander verlaufend ausgerichtet sind.

7. Mehrspur-Fahrrad nach einem der vorhergehenden Ansprüche, **dadurch gekennzeichnet, dass** die Lenkstange (10) zwei Lenkstangenabschnitte (27, 28) aufweist, die an ein gemeinsames Kardangelenk (29) angeschlossen sind.

8. Mehrspur-Fahrrad nach einem der vorhergehenden Ansprüche, **gekennzeichnet durch** ein eine Verdrehbewegung von Vorder- und Hinterteil (3, 4) nicht-linear dämpfendes Dämpfungselement (31).

9. Mehrspur-Fahrrad nach Anspruch 8, **dadurch gekennzeichnet, dass** das Dämpfungselement (31) einen verdrehbar am Vorderteil (3) angeordneten Wippenhebel (32) aufweist.

10. Mehrspur-Fahrrad nach Anspruch 9, **dadurch gekennzeichnet, dass** der Wippenhebel (32) endseitig jeweils verdrehbar daran angeordnete Gelenkkopfstangen (33) aufweist, die sich gelenkig gegenüber dem Hinterteil (4) abstützen.
